# EUROPÄISCHE PATENTSCHRIFT

(11) **EP 2 167 359 B1**
(45) Veröffentlichungstag und Bekanntmachung des Hinweises auf die Patenterteilung: **22.02.2012**
(21) Anmeldenummer: 08759146.7
(22) Anmeldetag: 09.06.2008
(51) Int. Cl.: B60T 8/48, B60L 7/26

(54) **BREMSAUSRÜSTUNG FÜR EIN LANDFAHRZEUG**
BRAKE EQUIPMENT FOR A LAND VEHICLE
INSTALLATION DE FREIN POUR UN VÉHICULE TERRESTRE

(30) Priorität: 19.06.2007 DE 102007028070
(43) Veröffentlichungstag der Anmeldung: 31.03.2010
(73) Patentinhaber: Lucas Automotive GmbH, 56070 Koblenz (DE)
(72) Erfinder: GILLES, Leo, 56077 Koblenz (DE); MICHELS, Erwin, 56829 Kail (DE); GIERING, Wilfried, 56743 Mendig (DE); OHLIG, Benedikt, 56179 Vallendar (DE)
(74) Vertreter: Schmidt, Steffen
(86) Internationale Anmeldenummer: PCT/EP2008/004619
(87) Internationale Veröffentlichungsnummer: WO 2008/155045

(56) Entgegenhaltungen:
- DE-A1- 19 604 134
- DE-A1- 19 912 866
- JP-A- 11 285 102
- JP-A- 2000 013 905
- JP-A- 2000 350 306
- US-A1- 2003 038 715

## Beschreibung

### Technischer Bereich

Nachstehend ist eine Bremsausrüstung für ein Landfahrzeug beschrieben. Dabei kann es sich um eine Bremsausrüstung mit einem elektronisch gesteuerten, hydraulischen, ein- oder mehrkreisigen Bremssystem in der Bremsanlage von Fahrzeugen handeln, die ausschließlich, oder zusätzlich zu einer Brennkraftmaschine, mit einer elektrischen Maschine im Antriebsstrang ausgestattet sind. Außerdem ist ein elektro-hydraulisches Bremssystem für derartige Kraftfahrzeuge beschrieben.

### Hintergrund

In der Vergangenheit wurde die in Kraftfahrzeugen benötigte elektrische Energie praktisch vollständig aus Kraftstoff (Benzin oder Diesel) erzeugt. Allerdings gibt es zum Beispiel bei elektrisch betriebenen Schienenfahrzeugen das Konzept, die beim Bremsen freiwerdende kinetische Energie - anstatt sie in Reibungswärme umzusetzen - wieder in elektrische (potentielle) Energie zurückzuwandeln. Durch entsprechende Regeleinrichtungen soll nun auch in Kraftfahrzeugen bei Bremsphasen zumindest ein Teil der Bremsenergie wieder zur Aufladung der elektrischen Fahrzeugbatterie (genauer gesagt des Akkumulators) verwendet werden.

Aus der EP-A 595 961 ist eine Bremsanlage für ein Fahrzeug mit elektrischem Antrieb bekannt, welches ein herkömmliches, mit hydraulisch betätigten Radbremsen versehenen Bremssystems und ein elektro-regeneratives Bremssystem umfasst. Das elektro-regenerative Bremssystem nutzt dabei die elektrische(n) Antriebsmaschine(n) des Kraftfahrzeugs zur Abbremsung und zur Energierückgewinnung während eines Bremsvorgangs.

Der Bremskraftanteil der hydraulischen Radbremse wird in dieser Anordnung während eines Bremsvorgangs dem Verhalten der regenerativen Bremse im Hinblick auf eine optimale Energierückgewinnung angepasst. Dazu wird aus dem Betätigungsgrad des Bremspedals die einzustellende Bremskraft an den Antriebsrädern bestimmt, während die nicht angetriebenen Räder in herkömmlicher Weise direkt abhängig von der Pedalbetätigung über die Hydraulik gebremst werden. Für die Antriebsräder wird aus Betriebsgrößen der im aktuellen Betriebszustand maximal nutzbare Bremskraftanteil der regenerativen Bremse ermittelt und die vorgegebene Bremskraft durch entsprechende Ansteuerung des Antriebsmotors eingestellt. Überschreitet die geforderte Bremskraft den maximal nutzbaren Bremskraftanteil, so wird der übersteigende Bremskraftanteil durch die Radbremse eingestellt. Für die Antriebsräder ist eine Entkopplung der Hydraulik von der Pedalbetätigung vorgesehen, während für die nicht angetriebenen Räder die herkömmlich direkte hydraulische Steuerung besteht.

Bei diesem Konzept ist eine Bremsanlage komplett neu zu gestalten, auszulegen und auf das jeweilige Fahrzeug abzustimmen um dieses mit einer Regenerativ-Bremsfunktionalität auszustatten. Dies stellt einen erheblichen Aufwand dar. Dieser Aufwand wird noch weiter dadurch erhöht, dass jedenfalls derzeit weniger als 5% der Endkunden eine Regenerativfunktionalität wünschen, zumindest einige Fahrzeughersteller sie jedoch aus Marketinggründen anbieten wollen / "müssen". Im Ergebnis bedeutet dies, dass bei bisherigen Lösungen für einen Fahrzeugtyp zwei Bremsausrüstungen vorzusehen waren.

Dokument JP 2000 350306 A offenbart eine Steuereinheit eines Bremssystems mit dem ein regenerativer Abbremsvorgang ausgeführt werden kann. Die Steuereinheit verbindet einen Hauptbremszylinder und einen ABS-Aktuator. Für jeden Bremskreis sind in der Steuereinheit zwei Hydraulikleitungen vorgesehen, wobei eine der Hydraulikleitungen eine Hauptverbindungsleitung und die andere eine Nebenverbindungsleitung ist. In der Hauptverbindungsleitung ist ein Hauptschaltventil und in der Nebenverbindungsleitung ist ein Nebenschaltventil vorgesehen. Ein Hydraulikspeicher ist mit der Nebenverbindungsleitung verbunden. Ferner ist ein Drucksteuerventil in der Nebenverbindungsleitung vorgesehen. Die Nebenverbindungsleitung ist mit einer Ansaugleitung einer Pumpe des ABS-Aktuators verbunden. Die Hauptverbindungsleitung ist mit den Einlassventilen des ABS-Aktuators verbunden.

Dokument DE 199 12 866 A1 offenbart eine Bremskraftsteuerung. Dabei führt ein Steuerungsschaltkreis eine regenerative kooperative Steuerung während eines regenerativen Bremsvorgangs durch, wobei eine Gesamtbremskraft vor und nach dem regenerativen Bremsvorgang nicht variiert. Dabei umfasst die Bremskraftsteuerung einen allgemeinen Vierradsteuerungskreis, einen Antiblockierbremssteuerungskreis und einen Vorderradsteuerungsschaltkreis. Der allgemeine Vierradsteuerungskreis erniedrigt und erhöht den Bremsdruck in den vom Hauptbremszylinder getrennten Radbremsen. Der Antiblockierbremssteuerungskreis verhindert ein Blockieren der Räder. Der Vorderradsteuerungsschaltkreis erniedrigt den Bremsdruck an den Vorderrädern unter vorher bestimmten Bedingungen.

Dokument US 2003/0038715 A1 offenbart ein System zum Bestimmen einer Bremsabsicht und zum Aktivieren und Betätigen des Bremssystems. Dabei werden die Radbremsen des Fahrzeugs aufgrund eines Sensorsignals betätigt, bevor der Fahrer das Bremspedal betätigt. Zum Erzeugen des Bremsdrucks wird die Pumpe eines Antiblockier- und Stabilitätskontrollsystems verwendet.

Dokument JP 11 285102 A offenbart ein Bremssystem mit einem Hydraulikspeicher. Bei einem regenerativen Bremsvorgang ist der Hydraulikspeicher mit dem Hauptbremszylinder verbunden und nimmt Bremsfluid auf. Bei einem Bremsvorgang der nur mit den Radbremsen erfolgt ist der Hydraulikspeicher geschlossen.

Dokument JP 2000 013905 A offenbart ein Bremssystem, bei dem während eines regenerativen Bremsvorgangs der Hauptbremszylinder entweder mit einem Hydraulikspeicher oder mit den Radbremsen verbunden ist. Durch das Schalten entsprechender Ventile wird der Hydraulikdruck in den Radbremsen reduziert, da ein Teil des vom Hauptbremszylinder bereitgestellten Bremsfluids vom Hydraulikspeicher und der andere Teil von den Radbremsen aufgenommen wird.

Dokument DE 196 04 134 A1 offenbart ein Verfahren und eine Vorrichtung zur Steuerung der Bremsanlage von Kraftfahrzeugen mit elektrischem Antrieb. Es wird ein Verfahren beschrieben, bei dem in einem ersten Bereich des Fahrerbremswunsches nahezu ausschließlich die regenerative Abbremsung das Bremsmoment aufbringt und die Reibungsbremse kein Bremsmoment aufbringt. Ferner wird eine Vorrichtung beschrieben, die eine Speicherkammer aufweist, die das im ersten Bereich des Bremswunsches vom Hauptbremszylinder bereitgestellte Druckmittel aufnimmt.

### Problem

Es besteht nun Bedarf an kostengünstigen Maßnahmen zur Gestaltung und funktionellen Ausgestaltung der Bremsanlage eines mit einer elektrischen Maschine im oder am Antriebsstrang versehenen Fahrzeugs, bei der eine variable Abstimmung zwischen der regenerativen Abbremsung über die elektrische Maschine und der Radbremse erreicht wird, um einen hohen Rekuperationsgrad der Energie bei für den Fahrer möglichst unverändertem Bremsverhalten zu erzielen.

### Lösung

Als Lösung wird eine Bremsausrüstung mit einem hydraulischen, ein- oder mehrkreisigen Bremssystem eines Landfahrzeuges mit elektrischem Antrieb vorgeschlagen, um eine regenerative Abbremsung des Landfahrzeuges über wenigstens eine elektrische Maschine im oder am Antriebsstrang des Fahrzeugs auszuführen und um eine Abbremsung des Landfahrzeuges über wenigstens eine Radbremse des wenigstens einen Bremskreises auszuführen.

Im Unterschied zu bisherigen Konzepten wird durch ein Zusatzmodul eine bestehende ABS-/VSC-/ESC-Bremsausrüstung praktisch ohne Veränderungen zu einer Regenerativbremsausrüstung erweitert. Dies erlaubt dem Fahrzeughersteller in kurzer Zeit und mit geringem zusätzlichem (Kosten-)Aufwand eine vom Markt nachgefragte Technik bereitzustellen. Dieses Zusatzmodul ist als eigenständig handhabbare Unterbaugruppe ausgestaltet, die eine bestehenden ABS-/VSC-/ESC-Bremsausrüstung zu einer Regenerativbremsausrüstung ergänzt.

Dies wird dadurch erreicht, dass ein Bremspedal und wenigstens ein Sensor zur Erfassung eines Bremswunsches des Fahrers vorgesehen ist. Ein Hauptbremszylinder dient zum Einspeisen von unter Druck stehendem Hydraulikfluid in die wenigstens eine Radbremse entsprechend dem Bremswunsch. Wenigstens ist dem wenigstens einen Bremskreis eine elektrohydraulische Steuereinheit mit wenigstens einem ersten Anschluss für Hydraulikfluid und wenigstens einem zweiten Anschluss für Hydraulikfluid zugeordnet.

Weiterhin ist ein elektronisches Steuergerät vorgesehen, das die Komponenten der elektrohydraulischen Steuereinheit in Abhängigkeit von einen Bremswunsch und/oder Umgebungs- oder aus dem Bremssystem kommenden Kenngrößen wiedergebenden Sensorsignalen steuert. Eine Regenerativbremseinheit weist wenigstens einen ersten Anschluss für Hydraulikfluid und wenigstens einen zweiten Anschluss für Hydraulikfluid Ventile und einen Hydraulikfluid-Druckspeicher auf. Die Regenerativbremseinheit ist in den wenigstens einen Bremskreis zwischen dem Hauptbremszylinder und der wenigstens einen Radbremse hydraulisch (seriell vor oder nach der elektrohydraulischen Steuereinheit vom Hauptbremszylinder aus gesehen) eingekoppelt. Das elektronische Steuergerät steuert sowohl die Komponenten der Regenerativbremseinheit als auch die Komponenten der elektrohydraulischen Steuereinheit in Abhängigkeit von einem Bremswunsch und/oder Umgebungs- oder aus dem Bremssystem kommenden Kenngrößen wiedergebenden Sensorsignalen, um zu bewirken, dass bei einem Regenerativbremsvorgang, zumindest für die wenigstens eine Radbremse, das dem Bremswunsch entsprechende Volumen an Hydraulikfluid nicht in die wenigstens eine Radbremsen eingespeist, sondern gespeichert wird, und die Regenerativbremseinheit unmittelbar mit der wenigstens einen Radbremse verbunden ist. Dabei kann die Ansteuerung der Regenerativbremseinheit RBU auch von einer separaten Steuereinheit erfolgen, die mit dem elektronischen Steuergerät der elektrohydraulischen Steuereinheit kommuniziert. Letztlich wird aber auch in einer solchen Anordnung die Regenerativbremseinheit von dem elektronischen Steuergerät der elektrohydraulischen Steuereinheit angesteuert. Dabei kann auch die Steuerung der Regenerativbremseinheit RBU die Priorität über das elektronische Steuergerät der elektrohydraulischen Steuereinheit haben.

Insgesamt ist die Anordnung so getroffen, dass das Zusatzmodul mit der Regenerativbremseinheit als An-/Einbaueinheit ("Add-On Unit" oder "Plugin Module") ausgestaltet ist, die sich an vorbestimmter Stelle in die Bremskreise einfügen, ohne dass nennenswerte Änderungen an den übrigen Komponenten erforderlich wären. Somit ist die Regenerativbremseinheit ein separates Modul, das sich bei ansonsten gleichbleibender Topologie / Layout der Bremskreise in diese einfügen oder integrieren lässt. So können auch bereits in Serienfertigung befindliche Bremsausrüstungen mit minimalem Aufwand zu Regenerativ-Bremsausrüstungen erweitert werden.

Die Bremsausrüstung kann einen Unterdruckbremskraftverstärker haben, der die Bremspedalbetätigung des Fahrers unterstützt. Es sind jedoch auch Ausführungsformen möglich, bei denen die Betätigung des Bremspedals unmittelbar und unverstärkt auf den Hauptbremszylinder wirkt. Wenn die Bremsausrüstung einen Unterdruckbremskraftverstärker hat, bedeutet eine - weiter unten im Detail erläuterte - Nachbildung des Bremspedalgefühls weniger Aufwand, da in diesem Fall die Kombination aus Unterdruckbremskraftverstärker und Hauptbremszylinder das Bremspedalgefühl für den Fahrer maßgeblich prägt.

Die Regenerativbremseinheit hat einen ersten zu steuernden Regenerativbrems-Betriebszustand, in dem die Regenerativbremseinheit ein dem Fahrerwunsch entsprechendes Einspeisen von Hydraulikfluid in die Radbremsen unterbindet und statt dessen das ein Speichern des Hydraulikfluids bewirkt. Sie hat außerdem einen zweiten zu steuernden Überblend-Betriebszustand, in dem die Regenerativbremseinheit von einer Regenerativbremsung zu einer elektrohydraulischen Bremsung überblendet, wobei in dem Überblend-Betriebszustand entsprechend dem Fahrerwunsch Hydraulikfluid in die Radbremsen eingespeist wird und dabei in einem Hydraulikfluid-Druckspeicher gespeichertes Hydraulikfluid in den jeweiligen Bremskreis abgegeben wird.

Die Regenerativbremseinheit weist einen Hydraulikfluid-Druckspeicher auf, der mit einer Feder vorgespannt sein kann, um gegen einströmendes Hydraulikfluid eine nachgiebige Gegenkraft auszuüben.

Der Hydraulikfluid-Druckspeicher in der Regenerativbremseinheit kann auch hydraulisch mit einem Schaltventil in Reihe geschaltet angeordnet sein, das eine elektromagnetisch einstellbare Durchlassstellung und eine federbetätigte Sperrstellung hat. Durch den Hydraulikfluid-Druckspeicher kann das Hydraulikfluid zeitlich und örtlich unmittelbar der elektrohydraulischen Steuereinheit zur Verfügung gestellt werden, so dass ein - auch schleichender, vom Fahrer nicht als solcher erkennbarer - Wechsel von einem Regenerativ-bremsvorgang zu einem hydraulischen Reibungsbremsvorgang sehr effizient ausgeführt werden kann.

In einer Variante der Bremsausrüstung kann die Regenerativbremseinheit in den wenigstens einen Bremskreis zwischen den Hauptbremszylinder und die elektrohydraulische Steuereinheit eingekoppelt sein, wobei der erste Anschluss für Hydraulikfluid der Regenerativ bremseinheit mit einem Anschluss des Hauptbremszylinders verbunden ist, und der zweite Anschluss für Hydraulikfluid der Regenerativbremseinheit mit dem ersten Anschluss der elektrohydraulischen Steuereinheit verbunden ist. Der zweite Anschluss für Hydraulikfluid der elektrohydraulischen Steuereinheit ist mit einer der Radbremsen verbunden, und die Regenerativbremseinheit hat einen dritten Anschluss für Hydraulikfluid, der mit der wenigstens einen der Radbremse unmittelbar verbunden ist. Das elektronische Steuergerät steuert auch hier (direkt oder indirekt) sowohl die Komponenten der Regenerativbremseinheit als auch die Komponenten der elektrohydraulischen Steuereinheit in Abhängigkeit von einen Bremswunsch und/oder Umgebungs- oder aus dem Bremssystem kommenden Kenngrößen wiedergebenden Sensorsignalen und leitet dabei die Regenerativbremseinheit anforderungsgerecht über von einem Regenerativbrems-Betriebszustand in einen Überblend-Betriebszustand (und/oder zurück).

In einer anderen Variante der Bremsausrüstung kann die Regenerativbremseinheit in wenigstens einen Bremskreis zwischen den Hauptbremszylinder und die elektrohydraulische Steuereinheit eingekoppelt sein. Der erste Anschluss für Hydraulikfluid der elektrohydraulischen Steuereinheit mit einem Anschluss des Hauptbremszylinders verbunden ist. Der zweite Anschluss für Hydraulikfluid der elektrohydraulischen Steuereinheit ist mit dem ersten Anschluss für Hydraulikfluid der Regenerativbremseinheit verbunden. Der zweite Anschluss für Hydraulikfluid der Regenerativbremseinheit ist mit der wenigstens einen Radbremse unmittelbar verbunden. Das elektronische Steuergerät steuert auch hier (direkt oder indirekt) sowohl die Komponenten der Regenerativbremseinheit als auch die Komponenten der elektrohydraulischen Steuereinheit in Abhängigkeit von einen Bremswunsch und/oder Umgebungs- oder aus dem Bremssystem kommenden Kenngrößen wiedergebenden Sensorsignalen und leitet dabei die Regenerativbremseinheit anforderungsgerecht über von einem Regenerativbrems-Betriebszustand in einen Überblend-Betriebszustand (und/oder zurück).

Die so regenerierte (= zurück gewonnene) Energie wird nicht dazu benutzt, den/die Akkumulator/en des Kraftfahrzeuges bedingungslos voll zu laden. Vielmehr wird ein Ladezustand der Akkumulatoren für einen Standverbrauch und die Startfähigkeit des Kraftfahrzeuges in Abhängigkeit von relevanten Umweltbedingungen ermittelt und eingeregelt. Ein darüber hinaus gehendes Laden der Akkumulatoren erfolgt nur noch in energetisch günstigen Fahrphasen (= Rekuperationsphasen), wenn dafür kein Kraftstoff verbraucht wird. Sofern die Akkumulatoren in diesen Rekuperationsphasen über die Startfähigkeits/ Standverbrauchs-Ladung hinaus geladen worden, steht elektrische Energie zur Verfügung, die direkt ins Bordnetz gespeist werden kann, ohne vom (kraftstoffgetriebenen) Generator aufgebracht werden zu müssen. Diese Überschusskapazität kann dazu genutzt werden, dem sonst mittels Kraftstoff zu betreibenden Generator weniger oder keine Energie zu entnehmen, was zu geringerem Kraftstoffverbrauch führt.

Durch diese Lösung(-svarianten) wird bei Einsatz einer nur geringfügig erweiterten oder modifizierten herkömmlichen elektrohydraulischen Bremsanlage mit Radbremsen das Potential der regenerativen Bremsung bei Elektro-Landfahrzeugen, bei Fahrzeugen mit Hybridantrieb, oder bei Kraftfahrzeugen mit einem ausreichend dimensionierten Startergenerator im oder am Antriebsstrang optimal ausgenutzt. Die elektrischen Maschinen gewinnen beim Abbremsen möglichst viel Energie zurück. Über die regenerative Abbremsung hinausgehende Bremsanforderungen werden durch die Radbremse abgedeckt. Bei ausgeschalteter elektrischer Anlage des Fahrzeugs wirkt die elektrohydraulische Bremsanlage auf alle gebremsten Fahrzeugräder ein. Dadurch wird die Betriebssicherheit des Kraftfahrzeugs beim Bremsen gewährleistet.

Weitere Merkmale, Eigenschaften, Vorteile und mögliche Abwandlungen der Bremsausrüstungwerden für einen Fachmann anhand der nachstehenden Beschreibung deutlich, in der auf die beigefügten Zeichnungen Bezug genommen ist.

### Kurzbeschreibung der Figuren

In den Fig. sind übereinstimmende, vergleichbare oder vergleichbar wirkende Komponenten oder Baugruppen mit übereinstimmenden Symbolen und /oder Bezugszeichen versehen und in der Regel nur an einer Stelle erläutert.
Fig. 1 zeigt eine schematische Darstellung eines aus dem Stand der Technik bekannten Hydraulikbremssystems in einer hydraulischen Bremsanlage mit ABS/ASR-Funktion im Überblick.
Fig. 2 zeigt eine schematische Darstellung der hydraulischen Bremsanlage aus Fig. 1 im Detail.
Fig. 3 zeigt eine schematische Darstellung einer Variante eines aus dem Stand der Technik bekannten Hydraulikbremssystems in einer hydraulischen Bremsanlage mit ABS/ASR-Funktion im Überblick.
Fig. 4 zeigt eine schematische Darstellung einer ersten erfindungsgemäßen Variante eines Hydraulikbremssystems in einer hydraulischen Bremsanlage mit ABS/ASR-Funktion im Überblick.
Fig. 5 zeigt eine schematische Darstellung einer zweiten erfindungsgemäßen Variante eines Hydraulikbremssystems in einer hydraulischen Bremsanlage mit ABS/ASR-Funktion im Überblick.

### Detaillierte Beschreibung der Figuren

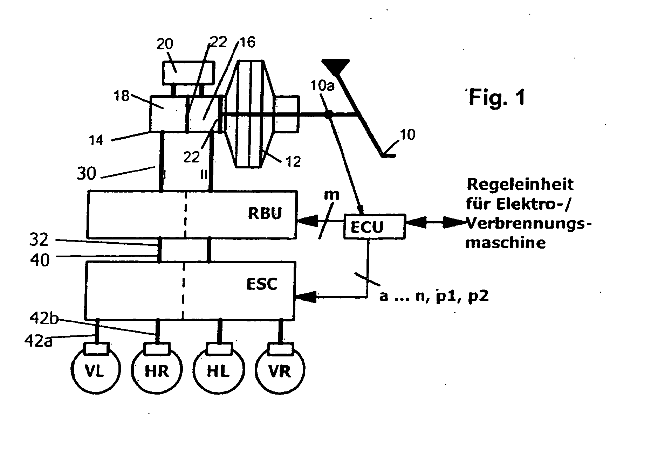

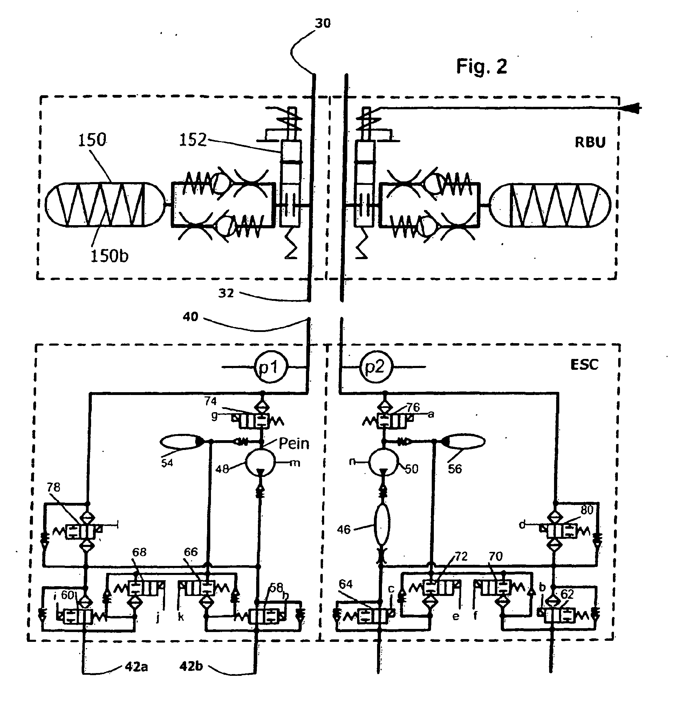

Fig. 1 und 2 sind schematische Darstellungen im Überblick und im Detail eines Hydraulikbremssystems mit X-Bremskraftaufteilung, in einer hydraulischen Bremsanlage mit ESC/ ABS/ ASR-Funktion. Es versteht sich jedoch, dass auch andere Bremskraftaufteilungen (z.B. H-Aufteilung) möglich sind. So kann zum Beispiel bei einem an der Hinterachse angetriebenen Kraftfahrzeug die Regenerativfunktionalität nur an der Hinterachse realisiert sein. Jedenfalls wird die Überblendfunktionalität zumindest auf der Achse bereitgestellt, die (auch) über eine elektrische Maschine zum Antreiben/Abbremsen des Kraftfahrzeuges verfügt.

Ein von einem Fahrer zu betätigendes Bremspedal 10 wirkt auf ein Eingangsglied eines (optionalen) pneumatischen Bremskraftverstärkers 12, dessen Ausgangsglied eine Druckstange eines Hauptbremszylinders 14 betätigt. Der Hauptbremszylinder 14 hat eine erste 16 und eine zweite Zylinderkammer 18, die beide mit einem Hydraulikreservoir 20 kommunizieren. Die beiden Zylinderkammern 16, 18 sind durch einen Zwischenkolben 22 von einander getrennt und beide speisen beim Betätigen des Bremspedals 10 jeweils einen von zwei Bremskreisen I, II, die eine Regenerativbremseinheit RBU und eine elektrohydraulische Steuereinheit ESC aufweisen. Am Bremspedal 10 ist zur Durchführung der regenerativen Abbremsung wenigstens eine Messeinrichtung 10a vorgesehen, die ein Maß für den Betätigungsweg x und/oder die Betätigungskraft des Bremspedals durch den Fahrer (= Bremswunsch) abgibt. Nachstehend ist nur der eine - in Fig. 1 linke - Bremskreis I beschrieben, während der andere Bremskreis II wegen seiner mit dem Bremskreis I identischen Funktionalität und Struktur unerörtert bleibt.

Die elektrohydraulische Steuereinheit ESC und die Regenerativbremseinheit RBU sind jeweils als separat zu handhabende Baueinheiten ausgeführt, die einfach mit ihren hydraulischen Anschlüssen miteinander zu koppeln sind. Weiterhin ist ein elektronisches Steuergerät ECU vorgesehen, das die Komponenten der elektrohydraulischen Steuereinheit ESC und der Regenerativbremseinheit RBU in Abhängigkeit von einen Bremswunsch und/oder Umgebungs- oder aus dem Bremssystem kommenden Kenngrößen wiedergebenden Sensorsignalen steuert.

Die beiden Bremskreise I, II umfassen bei einer X-Bremskraftaufteilung einerseits den Bremszylinder des linken Hinterrades und den Bremszylinder des rechten Vorderrades, und andererseits den Bremszylinder des linken Vorderrades und den Bremszylinder des rechten Hinterrades. Neben den Radbremszylindern sind die zugehörigen Bremsscheiben dargestellt. In der elektrohydraulischen Steuereinheit sind Dämpferkammern, Fluidförderpumpen, Speicherkammern, Einlassventile und Auslassventile sowie Umschaltventile und Hochdruckschaltventile vorgesehen. Die elektrohydraulische Steuereinheit ist so ausgelegt, dass eine radindividuelle Ansteuerung der Schaltventile abgeleitet aus Signalen aus Raddrehzahlsensoren und Drucksensoren möglich ist. Eine bremskreisspezifische Ansteuerung ist beispielsweise durch die Ansteuerung der Umschaltventile der Hochdruckschaltventile oder der Rückförderpumpen zu erreichen. Die dafür erforderlichen Ansteuersignale stellt die ECU bereit.

Die Bremskreise I, II weisen eine gemeinsame Regenerativbremseinheit RBU auf, die einen ersten Anschluss 30 für Hydraulikfluid und wenigstens einen zweiten Anschluss 32 für Hydraulikfluid hat, der mit dem ersten Anschluss 30 hydraulisch verbunden ist. Die Regenerativbremseinheit RBU ist in die Bremskreise I, II zwischen dem Hauptbremszylinder 14 und die Radbremsen VL, HR, HL, VR hydraulisch eingekoppelt, wobei die Bremskreise I, II des Weiteren eine elektrohydraulische Steuereinheit ESC haben, die für jeden Bremskreis einen ersten - dem Hauptbremszylinder zugewandten - Anschluss 40 für Hydraulikfluid und zwei zweite - den Radbremsen zugewandte - Anschlüsse 42a, 42b für Hydraulikfluid haben.

Eine vom ersten Anschluss 40 der elektrohydraulischen Steuereinheit ESC ausgehende Bremsleitung, an der ein Drucksensor p1 den anstehenden Hydraulikdruck erfasst und für das elektronische Steuergerät ECU ein entsprechendes Signal erzeugt, verzweigt sich in zwei zu den Radbremsen VL und HR führende Pfade. In den beiden Pfaden sind Einlassventile 58 bzw. 60 vorgesehen, welche eine federbetätigte Durchlassstellung und eine elektromagnetisch einstellbare Sperrstellung aufweisen. Zwischen den Einlassventilen und den Radbremsen VL, HR geht von der jeweiligen Bremsleitung je eine Rückführleitung aus. In diesen Rückführleitungen ist je ein Auslassventil 66, 68 angeordnet. Die beiden Auslassventile 66, 68 haben eine federbetätigte Sperrstellung und eine elektromagnetisch einstellbare Durchlassstellung. Die beiden Rückführleitungen werden zu einer Rückführleitung vereinigt, an der eine Niederdruck-Speicherkammer 54 angeschlossen ist. Außerdem weist der Bremskreis eine durch einen elektrischen Motor angetriebene, Hochdruck erzeugende Pumpe 48 auf. Diese ist an ihrer Ansaugseite mit der Rückführleitung verbunden. Ausgangsseitig ist die Pumpe 48 durch eine Förderleitung mit der Bremsleitung zwischen dem Hauptbremszylinder und den Einlassventilen 58, 60 verbunden.

Bei der Pumpe 48 kann es sich um eine (Radial-)Kolbenpumpe mit bis zu sechs oder mehr Kolben handeln, deren elektrischer Motor mit einem pulsweitenmodulierten (PWM) Betriebsstrom beaufschlagt wird. Der PWM-Betriebsstrom kann dabei eine minimale Pulsweite von etwa 15 - 45 Microsekunden, zum Beispiel 25 µSec haben.

Ferner ist in der Leitung zwischen der Speicherkammer 54 und der Einlassseite der Pumpe 48 ein Rückschlagventil angeordnet, welches bei geöffnetem Auslassventil 66 oder 68 das Entstehen von Unterdruck in den Radbremszylindern VL, HR (siehe Fig. 1) verhindert. Saugseitig führt zu der Pumpe 48 neben der Rückführleitung eine Ansaugleitung, in welcher sich ein Ansaugsteuerventil 74 mit einer federbetätigten Sperrstellung und einer elektromagnetisch einstellbaren Durchlassstellung befindet. Dieses Ansaugsteuerventil 74 ist über eine Leitung mit der Bremsleitung verbunden. Zwischen die vom Hauptbremszylinder 14 ausgehende Bremsleitung und den Eingang 40 der elektrohydraulischen Steuereinheit ESC ist die Regenerativbremseinheit RBU eingekoppelt.

Die Regenerativbremseinheit RBU hat einen Hydraulikfluid-Druckspeicher 150 und ein erstes Schaltventil 152 in Reihe geschaltet, wobei das Schaltventil 152 den Hydraulikfluid-Druckspeicher 150 mit der Verbindungsleitung zwischen dem ersten und dem zweiten Anschluss 30, 32 der Regenerativbremseinheit RBU verbindet. Das erste Schaltventil 152 der Regenerativbremseinheit RBU hat eine elektromagnetisch einstellbare Durchlassstellung und eine federbetätigte Sperrstellung. Damit ist zwischen dem Hauptbremszylinder 14 und der elektrohydraulischen Steuereinheit ESC eine freigeb- oder sperrbare Speicherkammer vorgesehen, in der das dem Bremswunsch entsprechende Volumen an Hydraulikfluid bei einem Regenerativbremsvorgang nicht in die Bremsen eingespeist wird, sondern in den Hydraulikfluid-Druckspeicher 150 fließen kann. Von dort kann es im Rahmen eines hydraulischen Reibungsbremsvorganges praktisch ohne zeitliche Verzögerung unmittelbar abgerufen werden, falls der Regenerativbremsvorgang nicht ausreichen sollte, um das erforderliche Bremsmoment "auf die Straße" zu bringen.

Dabei ist der Hydraulikfluid-Druckspeicher 150 mit einer Federanordnung 150b belastet, um - im Fall der Regenerativbremsung - gegen aus dem Hauptbremszylinder 14 kommendes Hydraulikfluid eine nachgiebige Gegenkraft auszuüben. Die Federanordnung 150b kann durch mehrere, mit unterschiedlichen Federeigenschaften (Federkonstanten) ausgestattete Federn gebildet sein, um dem Fahrer in - weiter unten im Detail erläuterten - regenerativen Bremsphasen ein möglichst realitätsnahes "Bremsgefühl" zu vermitteln. Dieses Bremsgefühl kann durch zusätzliche Drosselblenden, zum Beispiel jeweils eine im Einlasspfad und eine im Auslasspfad mit angepasstem Durchlassquerschnitt fein abgestimmt werden. Bei einer Anordnung mit einem Unterdruckbremskraftverstärker und einem diesem nachgeschalteten Hauptbremszylinder bestimmen diese beiden Komponenten jedoch zumindest am Anfang einer Bremsvorgangs das Pedalverhalten und das dem Fahrer dargeboten Pedalgefühl soweit, dass zumindest in der Regel zusätzliche Drosselblenden im Einlasspfad und im Auslasspfad mit angepasstem Durchlassquerschnitt etc. nicht erforderlich sein sollten.

In der Bremsleitung in der elektrohydraulischen Steuereinheit ESC befindet sich ein Absperrschaltventil 78, 80 welches durch ein Druckbegrenzungsventil überbrückt ist. Das Absperrschaltventil 78, 80 weist eine federbetätigte Sperrstellung und eine elektromagnetisch einstellbare Durchlassstellung auf. Das Druckbegrenzungsventil lässt bei einem von einer bremswunschunabhängigen Bremssituation, zum Beispiel in einem Schlupfregelfall von den Radbremsen kommendes Hydraulikfluid auch bei einer elektromagnetisch eingeschalteten Sperrstellung des Absperrschaltventils 78, 80 zum Hauptbremszylinder 14 strömen.

Im Normalbetrieb sind die elektrisch anzusteuernden Ventile in ihrer nicht angesteuerten Grundstellung. Dies bedeutet, dass die Einlassventile geöffnet, und die Auslassventile geschlossen sind. Dadurch werden die entsprechenden Radbremsen mit dem vom Fahrer durch Betätigen des Pedals eingesteuerten Druck beaufschlagt. Im ABS-Fall werden die entsprechenden Ventile gesteuert geöffnet oder geschlossen und die Pumpe angesteuert, um Druck in der oder den betroffenen Radbremsen auf- oder abzubauen, oder zu halten.

Weisen die Antriebsräder des Fahrzeugs einen zu hohen Antriebsschlupf auf, liegt also ein Fall für die Schlupfregelung vor, wird das entsprechende Umschaltventil in seine Sperrstellung und das Ansaugventil in seine Durchlassstellung geschaltet. Durch Aktivieren der Pumpe 48 in der elektrohydraulischen Steuereinheit ESC wird ohne Pedalbetätigung Hydraulikfluid aus dem Hydraulikreservoir 54 der elektrohydraulischen Steuereinheit ESC angesaugt und über das geöffnete Einlassventil in den oder die betroffenen Radbremszylinder eingesteuert. Dadurch kann unabhängig von der Bremspedalbetätigung Druck in den Radbremsen aufgebaut werden. Der Druckabbau erfolgt durch Öffnen der Auslassventile, Schließen der Ansaugventile und Öffnen der Umschaltventile.

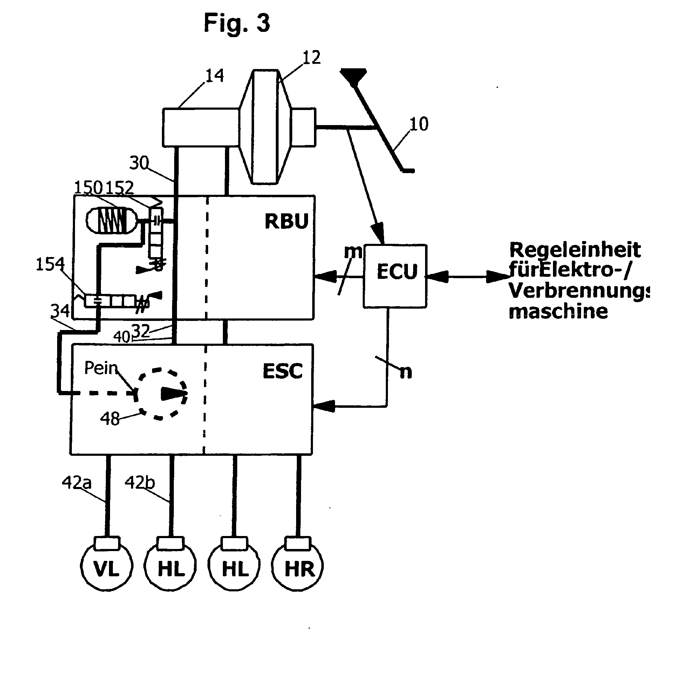

In Fig. 3 ist ein Bremssystem gezeigt, bei dem die elektrohydraulische Steuereinheit ESC gegenüber der Anordnung aus der Fig. 2 bis auf eine weitere Anschlussleitung zum Pumpeneinlass Pₑᵢₙ der Pumpe 48 unverändert ist. Die Regenerativbremseinheit RBU weist gegenüber der Anordnung aus der Fig. 2 keine Drosseln und Blenden auf. Es ist jedoch verstanden, dass auch in dieser Variante (unter vergleichbaren Gesichtspunkten wie bei der Variante aus Fig. 2) die Drosseln und Blenden vorgesehen werden können. Zwischen dem Hydraulikfluid-Druckspeicher 150 der Regenerativbremseinheit RBU und dem dazu in Reihe geschalteten ersten Schaltventil 152 zweigt eine Hydraulikleitung zu einem zweiten Schaltventil 154 ab, welches zu einem dritten Anschluss 34 der Regenerativbremseinheit RBU führt. Das zweite Schaltventil 154 der Regenerativbremseinheit RBU weist eine federbetätigte Sperrstellung und eine elektromagnetisch einstellbare Durchlassstellung auf.

Der dritte Anschluss 34 der Regenerativbremseinheit RBU führt zu einem Anschluss der elektrohydraulischen Steuereinheit ESC, der mit dem Pumpeneinlass Pₑᵢₙ der Pumpe 48 der elektrohydraulischen Steuereinheit ESC verbunden ist. Damit kann bei einer Regenerativbremsung das zweite Schaltventil 154 der Regenerativbremseinheit RBU geschlossen bleiben, während das erste Schaltventil 152 der Regenerativbremseinheit RBU geöffnet wird um in den Hydraulikfluid-Druckspeicher 150 der Regenerativbremseinheit RBU das aus dem Hauptbremszylinder 14 kommende Hydraulikfluid zu leiten. Gleichzeitig sind bei der Regenerativbremsung das Ansaugsteuerventil 74 und das Absperrschaltventil 78 in der elektrohydraulischen Steuereinheit ESC geschlossen.

Um der Pumpe 48 der elektrohydraulischen Steuereinheit ESC für eine fahrerunabhängige Bremsbetätigung schnell Hydraulikfluid zur Verfügung zu stellen, kann nach (oder auch zum Abbruch) einer Regenerativbremsung das zweite Schaltventil 154 der Regenerativbremseinheit RBU geöffnet werden, so dass aus dem Hydraulikfluid-Druckspeicher 150 - durch dessen Feder 150b - heraus gepresstes Hydraulikfluid am Pumpeneingang Pₑᵢₙ ansteht und durch die Schaltventile der elektrohydraulischen Steuereinheit ESC in gesteuerter Weise in die Radbremsen gefördert werden kann.

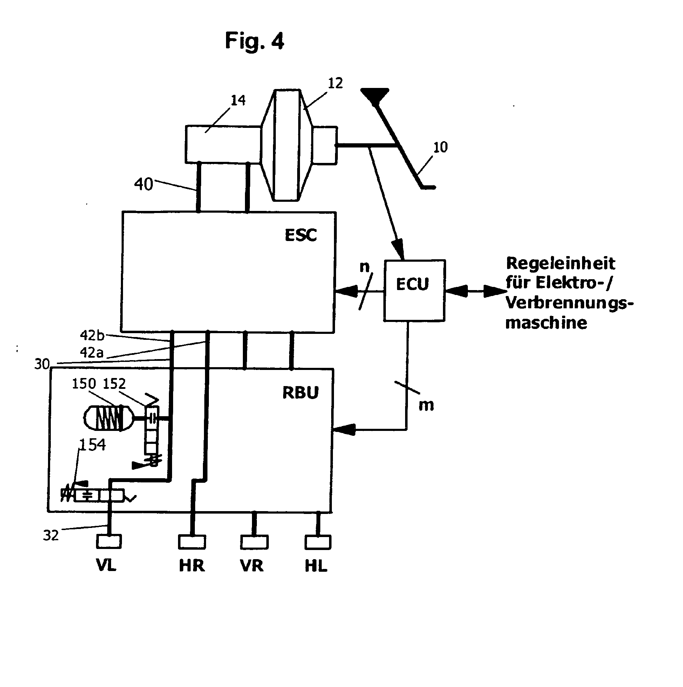

In Fig. 4 ist eine erste erfindungsgemäße Variante eines Bremssystems gezeigt, bei dem die elektrohydraulische Steuereinheit ESC mit ihrem ersten Anschluss 40 direkt am Hauptbremszylinder 14 angeschlossen ist und die Regenerativbremseinheit RBU mit ihrem ersten Anschluss 30 an den zweiten Anschluss 42b der elektrohydraulischen Steuereinheit ESC angeschlossen ist. Mit anderen Worten ist die Regenerativbremseinheit RBU zwischen die elektrohydraulische Steuereinheit ESC und die Radbremsen geschaltet, während die elektrohydraulischen Steuereinheit ESC direkt am Hauptbremszylinder 14 angeschlossen ist.

Die Funktionalität der elektrohydraulischen Steuereinheit ESC bleibt in diesem Fall völlig unverändert; die Regenerativbremseinheit RBU nimmt bei einem Regenerativ-bremsvorgang das Hydraulikfluid anstelle der Radbremsen auf. In der in Fig. 4 gezeigten Variante hat eine Radbremse (VL) eine Speicherkammer 150, zur Aufnahme von Hydraulikfluid anstelle der Radbremse. Die andere Radbremse dieses Bremskreises (HR) hat keine Speicherkammer. In diesem Fall hat auch die Vorderachse eine zur Energie-Rekuperation geeignete elektrische Maschine, während die Hinterachse in herkömmlicher Weise zu bremsen ist. Es versteht sich, dass diese Konfiguration auch zu vertauschen ist, also die Hinterachse eine zur Energie-Rekuperation geeignete elektrische Maschine hat, während die Vorderachse in herkömmlicher Weise zu bremsen ist.

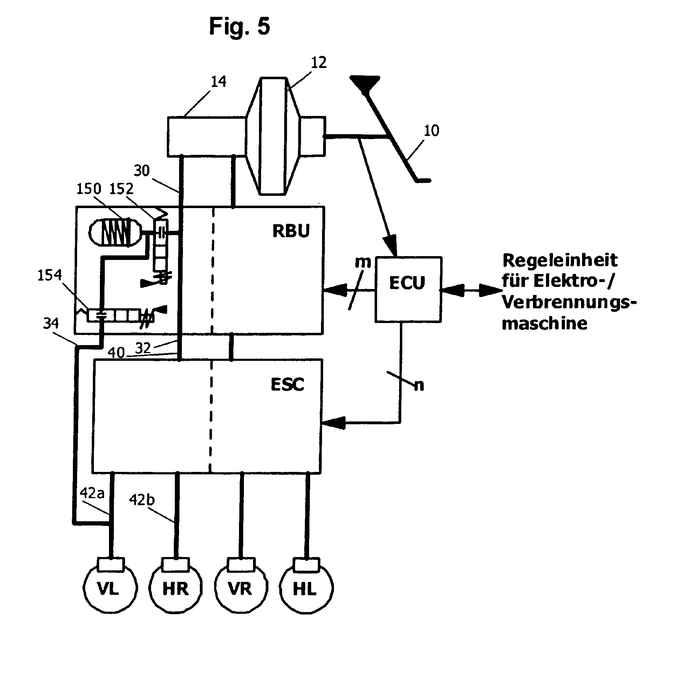

In Fig. 5 ist eine zweite erfindungsgemäße Variante eines Bremssystems gezeigt, bei dem die elektrohydraulische Steuereinheit ESC gegenüber der Anordnung aus den Fig. 2 und 4 unverändert ist. Die Regenerativbremseinheit RBU weist gegenüber der Anordnung aus der Fig. 2 keine Drosseln und Blenden auf. Zwischen dem Hydraulikfluid-Druckspeicher 150 der Regenerativbremseinheit RBU und dem dazu in Reihe geschalteten ersten Schaltventil 152 zweigt eine Hydraulikleitung zu einem zweiten Schaltventil 154 der Regenerativbremseinheit RBU ab, welches zu einem dritten Anschluss 34 der Regenerativbremseinheit RBU führt. Das zweite Schaltventil 154 der Regenerativbremseinheit RBU weist eine federbetätigte Sperrstellung und eine elektromagnetisch einstellbare Durchlassstellung auf.

Der dritte Anschluss 34 der Regenerativbremseinheit RBU führt zum zweiten Anschluss 42a der elektrohydraulischen Steuereinheit ESC, der mit einer der Radbremsen VL verbunden ist. Damit kann bei einer Regenerativbremsung das zweite Schaltventil 154 der Regenerativbremseinheit RBU geschlossen bleiben, während das erste Schaltventil 152 der Regenerativbremseinheit RBU geöffnet wird um in den Hydraulikfluid-Druckspeicher 150 der Regenerativbremseinheit RBU das aus dem Hauptbremszylinder 14 kommende Hydraulikfluid zu leiten. Gleichzeitig sind bei der Regenerativbremsung das Ansaugsteuerventil 74 und das Absperrschaltventil 78 in der elektrohydraulischen Steuereinheit ESC geschlossen.

Im Normalbremsbetrieb sind bei dieser Variante das erste Schaltventil 152 und das zweite Schaltventil 154 der Regenerativbremseinheit RBU geschlossen, so dass die Regenerativbremseinheit RBU unwirksam geschaltet ist und die elektrohydraulische Steuereinheit ESC in ihrer unveränderten Weise funktionieren kann. Um Hydraulikfluid aus dem Hydraulikfluid-Druckspeicher 150 der Regenerativbremseinheit RBU der elektrohydraulischen Steuereinheit ESC zum Beispiel für fahrerunabhängige Bremsvorgänge zur Verfügung zu stellen geht die elektrohydraulische Steuereinheit ESC in Druckabbau-Betrieb und das zweite Schaltventil 154 der Regenerativbremseinheit RBU öffnet. Dann kann Hydraulikfluid aus dem Hydraulikfluid-Druckspeicher 150 der Regenerativbremseinheit RBU abgepumpt werden.

Neben der vorstehend erläuterten und in den Fig. dargestellten, hydraulisch betätigten Radbremsen ist im Rahmen des Elektro- bzw. Hybridfahrzeugs eine regenerative Abbremsung über eine oder mehrere für den Antrieb des Kraftfahrzeuges verwendete elektrische Maschinen möglich. Dabei wird/werden die als Generator geschaltete(n) elektrische(n) Maschine(n) zur Ladung des/der Akkumulators/en angesteuert. Zur Steuerung des/der elektrische(n) Maschine(n) ist dabei in der Regel eine eigene Steuereinheit vorgesehen. Diese steht mit der die hydraulische Bremsanlage steuernden Steuereinheit in Datenkommunikationsverbindung.

Diese Steuereinheit für die hydraulische Bremsanlage empfängt ein Maß für die Bremspedalbetätigung, Größen für die Radgeschwindigkeiten der Fahrzeugräder und den Druck in den einzelnen Fahrzeugbremsen sowie den Druck am Ausgang des Hauptbremszylinders. Ferner dient ein beispielsweise serieller Bus als Verbindung zur Motorsteuereinheit dazu, eine das von der regenerativen Bremse eingestellte Bremsmoment repräsentierende Größe zu empfangen und eine das einzustellende Bremsmoment repräsentierende Größe abzugeben. Ferner sind Ausgangssteuerleitungen zur Steuerung der diversen Ventile sowie der Pumpe vorgesehen.

Ziel ist es, bei Elektro- bzw. Hybridfahrzeugen möglichst viel der Energie zurück zu gewinnen, die beim Abbremsen freigesetzt wird. Da die regenerative Abbremsung über die Antriebsmaschine des Fahrzeugs nicht ausreichend ist, um alle Bremsanforderungen des Fahrzeugs abzudecken, ist das Fahrzeug zusätzlich mit einer Radbremse ausgerüstet. Die regenerative Abbremsung und die Radbremse sind so aufeinander abzustimmen, dass möglichst viel Energie zurück gewonnen werden kann während gleichzeitig die sonstigen Funktionen einer Bremsanlage (ABS, VSC, TC, ESP, etc.) ebenfalls zur Verfügung stehen.

In der die hydraulische Bremsanlage steuernden Steuereinheit werden die Abbremsungen aus Radbremse und regenerativer Bremse koordiniert. Dazu wird der Steuereinheit wenigstens ein, die Bremspedalbetätigung wiedergebendes Signal zugeführt. Ist die elektrische Anlage in Betrieb, können die elektrische(n) Maschine(n) das Fahrzeug abbremsen. Bei Beginn einer normalen Bremsung (also keiner Not- oder Panikbremsung) werden mit Betätigen des Bremspedals in der hydraulischen Bremsanlage die Ventile derart angesteuert, dass kein oder nur ein geringer Bremsdruckaufbau in den Radbremszylindern stattfindet, der zu keiner bzw. zu keiner nennenswerten hydraulischen Bremswirkung führt. Vielmehr wird ein Regenerativbremsvorgang eingeleitet. Dazu wird das erste Schaltventil 152 der Regenerativbremseinheit RBU in seine elektromagnetisch eingeschaltete Sperrstellung gebracht. Auch das Ansaugsteuerventil 78 der elektrohydraulischen Steuereinheit ESC wird in seine elektromagnetisch eingeschaltete Sperrstellung gebracht. Außerdem wird das mit dem Hydraulikfluid-Druckspeicher 150 in Reihe geschaltete Schaltventil 152 der Regenerativbremseinheit RBU in seine federbetätigte Durchlassstellung gebracht.

Die Bremspedalbetätigung durch den Fahrer lässt Hydraulikfluid in den Hydraulikfluid-Druckspeicher 150 der Regenerativbremseinheit RBU einströmen, während die Feder 150b des Hydraulikfluid-Druckspeichers 150 komprimiert wird. Von der Betätigung des Bremspedals und ggf. weiteren Betriebsgrößen wird der Bremswunsch des Fahrers abgeleitet. Dieser wird in ein Sollbremsmoment umgesetzt, das dann in der Steuereinheit der elektrischen Maschine in entsprechende Betriebsparameter für die elektrische Maschine umgesetzt wird. Sobald die Speicherkammer 150 der Regenerativbremseinheit RBU gefüllt ist ohne dass der Bremswunsch beendet ist oder abnimmt, wird bei einem darüber hinausgehenden Bremswunsch zusätzlich zur regenerativen Abbremsung Bremsdruck in den hydraulischen Bremsen aufgebaut und so eine überlagerte Abbremsung durch die Radbremse entsprechend dem Bremswunsch erreicht.

Sofern der Bremswunsch abnimmt oder beendet ist, bevor die Speicherkammer 150 der Regenerativbremseinheit RBU vollständig gefüllt ist, erfolgt der Druckabbau der Speicherkammer derart, dass das das Ansaugsteuerventil 78 in der elektrohydraulischen Steuereinheit ESC seine Durchlassstellung einnimmt oder in ihr verbleibt. Außerdem verbleibt / geht das mit dem Hydraulikfluid-Druckspeicher 150 in Reihe geschaltete erste Schaltventil 152 der Regenerativbremseinheit RBU in seiner Durchlassstellung.

Durch die vorstehend beschriebene Lösung bleibt die dem Fahrer bekannte Pedalcharakteristik erhalten. Insbesondere wird im Bereich der regenerativen Abbremsung trotz des geringen Bremsdrucks kein vom erwarteten abweichendes Pedalverhalten erzeugt.

Bei Abbremsungen in Gefahren- bzw. Grenzsituationen ist aber eine gleichmäßige, bzw. gezielt vorwählbare Bremskraftverteilung vorteilhaft. Daher öffnet das Steuergerät die Auslassventile nicht, wenn solche Situationen beim Bremsbeginn erkannt werden. Die Radbremse bremst sofort an, so dass die vorgegebene Bremskraftverteilung gewährleistet ist. Derartige Bremssituationen sind beispielsweise so genannte Panikbremsungen, die u. a. aus der Betätigungsgeschwindigkeit des Bremspedals abgeleitet werden können.

Ferner gibt es Betriebssituationen, in denen der Anteil der regenerativen Abbremsung reduziert werden muss. Dies ist z. B. dann der Fall, wenn die Batterie voll ist, die Ladeleistung über der Zeit zu hoch oder infolge einer Veränderung der Fahrzeuggeschwindigkeit die Abhängigkeit des Motorbremsmoments von der Fahrzeuggeschwindigkeit sich auf die Gesamtabbremsung auswirkt. In diesen Betriebssituationen würde sich die Gesamtabbremsung verringern, wenn der Fahrer den Pedalweg nicht verändert. Da vorgesehen sein kann, dass die Steuereinheit des Elektroantriebs das momentan eingestellte Motormoment an die Bremsensteuereinheit zurückmeldet, werden in solchen Fällen die Auslassventile, sofern sie noch offen sind, geschlossen und die Pumpe gestartet. Dadurch wird das Flüssigkeitsvolumen, das sich in der Speicherkammer angesammelt hat, wieder in den Bremskreis zurückgebracht. Damit kann ohne Pedalwegveränderung der Anteil der Radbremse erhöht werden.

Um zu vermeiden, dass sich dadurch die erforderliche Pedalkraft am Fahrerfuß erhöht, kann vorgesehen sein, dass in Betriebssituationen, in denen der Anteil der Radbremse erhöht wird, zusätzlich zur Pumpe 48 auch noch das Umschaltventil der elektrohydraulischen Steuereinheit ESC angesteuert wird, so dass der Bremsdruck im Rad erhöht werden kann, ohne dass sich die Gegenkraft am Pedal erhöht.

Liegt keine dieser besonderen Betriebssituationen vor, so werden die Schaltventile nach Maßgabe eines in der Steuereinheit abgelegten Zusammenhangs des Füllgrades der Speicherkammer 150 der elektrohydraulischen Steuereinheit ESC zum Pedalweg geschlossen. Die Ventile werden dabei dann geschlossen, wenn ein bestimmter Pedalweg, der einem bestimmten Füllungsgrad der Speicherkammer 150 der Regenerativbremseinheit RBU entspricht, überschritten ist.

Eine andere Vorgehensweise besteht darin, dass bei der regenerativen Abbremsung die Speicherkammer 150 der Regenerativbremseinheit RBU vollständig gefüllt wird. Setzt bei gefüllter Speicherkammer 150 das Antiblockiersystem der Radbremse ein, so kann ein Druckabbau wegen der gefüllten Speicherkammer nur langsam vor sich gehen. Daher werden über die Steuereinheit der oder die Antriebsmotoren kurzfristig auf Antrieb geschaltet, um das überschüssige Bremsmoment der Räder zu kompensieren. Bei geöffneten Ventilen ist dabei der Widerstand gegen das Pedal durch die Feder 150b in der Speicherkammer 150 bestimmt. Diese Feder ist in der Regel schwach dimensioniert, damit im Blockierfall der Bremsdruck auf kleine Werte abgebaut werden kann. Wenn während der regenerativen Abbremsungsphase die Speicherkammerfeder den einzigen Widerstand gegen das Pedal darstellt, ist in einigen Ausführungsbeispielen die Feder evtl. etwas stärker auszuführen. Dies bedeutet aber, dass im Antiblockierfall der Bremsdruck nicht auf kleine Werte abgebaut werden kann. Auch in diesem Fall können die Antriebsmaschinen des Elektrofahrzeugs auf Antrieb geschaltet werden, um das zu große Bremsmoment der Radbremse zu kompensieren. Alternativ dazu kann die Härte der Rückstellfedern am Bremspedal 10 oder im Hauptbremszylinder 14 vergrößert werden, um während der regenerativen Abbremsphase die Pedalgegenkraft zu erhöhen.

## Patentansprüche

1. Bremsausrüstung mit einem hydraulischen, ein- oder mehrkreisigen Bremssystem eines Landfahrzeuges mit elektrischem Antrieb, um eine regenerative Abbremsung des Landfahrzeuges über wenigstens eine elektrische Maschine im oder am Antriebsstrang des Fahrzeugs auszuführen und um eine Abbremsung des Landfahrzeuges über wenigstens eine Radbremse des wenigstens einen Bremskreises auszuführen, wobei
• ein Bremspedal (10) und wenigstens ein Sensor (10a) zur Erfassung eines Bremswunsches des Fahrers vorgesehen ist,
• ein Hauptbremszylinder (14) zum Einspeisen von unter Druck stehendem Hydraulikfluid in die wenigstens eine Radbremse (VL, HR, VR, HL) entsprechend dem Bremswunsch vorgesehen ist, wobei
• wenigstens dem wenigstens einen Bremskreis (I, II) eine elektrohydraulische Steuereinheit (ESC) mit
• wenigstens einem ersten Anschluss (40) für Hydraulikfluid und wenigstens einem zweiten Anschluss (42a, 42b) für Hydraulikfluid zugeordnet ist,
• ein elektronisches Steuergerät (ECU) vorgesehen ist, das Komponenten der elektrohydraulischen Steuereinheit (ESC) wie Hydraulik-Pumpe und Schaltventile in Abhängigkeit von einem Bremswunsch und/oder Umgebungs- oder aus dem Bremssystem kommenden Kenngrößen wiedergebenden Sensorsignalen steuert, und
eine Regenerativbremseinheit (RBU), die
• wenigstens einen ersten Anschluss (30) für Hydraulikfluid, wenigstens einen zweiten Anschluss (32) für Hydraulikfluid, ventile (152, 154) und einen Hydraulikfluid-Druckspeicher (150) aufweist,
• in den wenigstens einen Bremskreis (I, II) zwischen dem Hauptbremszylinder (14) und der wenigstens einen Radbremse (VL, HR, VR, HL) hydraulisch eingekoppelt ist,
**dadurch gekennzeichnet, dass**
• das elektronische Steuergerät (ECU) sowohl die Komponenten der Regenerativbremseinheit (RBU) als auch die Komponenten der elektrohydraulischen Steuereinheit (ESC) in Abhängigkeit von einem Bremswunsch und/oder Umgebungs- oder aus dem Bremssystem kommenden Kenngrößen wiedergebenden Sensorsignalen steuert, um zu bewirken, dass bei einem Regenerativbremsvorgang, zumindest für die wenigstens eine Radbremse (VL, HR, VR, HL), das dem Bremswunsch entsprechende Volumen an Hydraulikfluid nicht in die auszuführen und um Radbremse (VL, HR, VR, HL) eingespeist, sondern gespeichert wird, und
• die Regenerativbremseinheit (RBU) unmittelbar mit der wenigstens einen Radbremse (VL, HR, VR, HL) verbunden ist.

2. Bremsausrüstung nach Anspruch 1, **dadurch gekennzeichnet, dass** die Regenerativbremseinheit (RBU) und die elektrohydraulische Steuereinheit (ESC)
• einen ersten zu steuernden Regenerativbrems-Betriebszustand haben, in dem die Regenerativbremseinheit (RBU) und die elektrohydraulische Steuereinheit (ESC) ein dem Fahrerwunsch entsprechendes Einspeisen von Hydraulikfluid in die wenigstens eine Radbremse (VL, HR, VR, HL) unterbindet und statt dessen ein Speichern des Hydraulikfluids bewirken, und
• einen zweiten zu steuernden Überblend-Betriebszustand haben, in dem die Regenerativbremseinheit (RBU) und die elektrohydraulische Steuereinheit (ESC) von einer Regenerativbremsung zu einer elektrohydraulischen Bremsung überblenden, wobei in dem Überblend-Betriebszustand entsprechend dem Fahrerwunsch Hydraulikfluid in die wenigstens eine Radbremse (VL, HR, VR, HL) eingespeist wird und dabei Hydraulikfluid in den jeweiligen Bremskreis (I, II) abgegeben wird.

3. Bremsausrüstung nach Anspruch 2, **dadurch gekennzeichnet, dass** der Hydraulikfluid-Druckspeicher (150) mit einer Feder (150b) vorgespannt ist, um gegen einströmendes Hydraulikfluid eine nachgiebige Gegenkraft auszuüben, und/oder
der Hydraulikfluid-Druckspeicher (150) in der Regenerativbremseinheit (RBU) mit einem ersten Schaltventil (152) in Reihe geschaltet angeordnet ist, das eine elektromagnetisch einstellbare Durchlassstellung und eine federbetätigte Sperrstellung hat.

4. Bremsausrüstung nach einem der Ansprüche 2 oder 3, **dadurch gekennzeichnet, dass** die Regenerativbremseinheit (RBU) in den wenigstens einen Bremskreis (I, II) zwischen den Hauptbremszylinder (14) und die elektrohydraulische Steuereinheit (ESC) eingekoppelt ist, wobei
• der erste Anschluss (30) für Hydraulikfluid der Regenerativbremseinheit (RBU) mit einem Anschluss des Hauptbremszylinders (14) verbunden ist,
• der zweite Anschluss (32) für Hydraulikfluid der Regenerativbremseinheit (RBU) mit dem ersten Anschluss (40) der elektrohydraulischen Steuereinheit (ESC) verbunden ist, und
• ein dritter Anschluss (34) für Hydraulikfluid der Regenerativbremseinheit (RBU) mit der wenigstens einen Radbremse (VL, HR, VR, HL) unmittelbar verbunden ist,
• der zweite Anschluss (42a, 42b) für Hydraulikfluid der elektrohydraulischen Steuereinheit (ESC) mit einer der Radbremsen (VL, HR, VR, HL) verbunden ist, und
• das elektronische Steuergerät (ECU) sowohl die Komponenten der Regenerativbremseinheit (RBU) als auch die Komponenten der elektrohydraulischen Steuereinheit (ESC) in Abhängigkeit von einem Bremswunsch und/oder Umgebungs- oder aus dem Bremssystem kommenden Kenngrößen wiedergebenden Sensorsignalen steuert und dabei die Regenerativbremseinheit (RBU) zwischen dem Regenerativbrems-Betriebszustand und dem Überblend-Betriebszustand anforderungsgerecht hin und/oder her schaltet.

5. Bremsausrüstung nach Anspruch 4, sofern dieser von Anspruch 3 abhängt, wobei das erste Schaltventil (152) den Hydraulikfluid-Druckspeicher (150) mit der Verbindungsleitung zwischen dem ersten und dem zweiten Anschluss (30, 32) der Regenerativbremseinheit (RBU) verbindet, und/oder in der Regenerativbremseinheit (RBU) zwischen dem Hydraulikfluid-Druckspeicher (150) und dem dazu in Reihe geschalteten ersten Schaltventil (152) eine Hydraulikleitung zu einem zweiten Schaltventil (154) abzweigt, welches den dritten Anschluss (34) sperrt oder freigibt, wobei das zweite Schaltventil (154) eine federbetätigte Sperrstellung und eine elektromagnetisch einstellbare Durchlassstellung aufweist.

6. Bremsausrüstung nach einem der Ansprüche 4 oder 5, **dadurch gekennzeichnet, dass** bei einer Regenerativbremsung ein Ansaugsteuerventil (74) und ein Absperrschaltventil (78) in der elektrohydraulischen Steuereinheit (ESC) geschlossen sind.

7. Bremsausrüstung nach einem der Ansprüche 5 oder 6, **dadurch gekennzeichnet, dass** bei einer Regenerativbremsung das zweite Schaltventil (154) der Regenerativbremseinheit RBU geschlossen bleibt, während das erste Schaltventil (152) der Regenerativbremseinheit RBU geöffnet ist um in den Hydraulikfluid-Druckspeicher (150) der Regenerativbremseinheit (RBU) das aus dem Hauptbremszylinder (14) kommende Hydraulikfluid zu leiten, und/oder nach oder zum Abbruch einer Regenerativbremsung das zweite Schaltventil (154) der Regenerativbremseinheit (RBU) geöffnet wird, so daß aus dem Hydraulikfluid-Druckspeicher (150) heraus gepresstes Hydraulikfluid an der wenigstens einen Radbremse (VL, HR, VR, HL) und dem zweiten Anschluss (42a, 42b) für Hydraulikfluid der elektrohydraulischen Steuereinheit (ESC) ansteht.

8. Bremsausrüstung nach einem der Ansprüche 2 oder 3, **dadurch gekennzeichnet, dass** die elektrohydraulische Steuereinheit (ESC) in den wenigstens einen Bremskreis (I, II) zwischen den Hauptbremszylinder (14) und der Regenerativbremseinheit (RBU) eingekoppelt ist, wobei
• der erste Anschluss (40) für Hydraulikfluid der elektrohydraulischen Steuereinheit (ESC) mit einem Anschluss des Hauptbremszylinders (14) verbunden ist, und
• der zweite Anschluss (42a, 42b) für Hydraulikfluid der elektrohydraulischen Steuereinheit (ESC) mit dem ersten Anschluss (30) für Hydraulikfluid der Regenerativbremseinheit (RBU) verbunden ist,
• der zweite Anschluss (32) für Hydraulikfluid der Regenerativbremseinheit (RBU) mit der wenigstens einen Radbremse (VL, HR) unmittelbar verbunden ist, und
• das elektronische Steuergerät (ECU) sowohl die Komponenten der Regenerativbremseinheit (RBU) als auch die Komponenten der elektrohydraulischen Steuereinheit (ESC) in Abhängigkeit von einem Bremswunsch und/oder Umgebungs- oder aus dem Bremssystem kommenden Kenngrößen wiedergebenden Sensorsignalen steuert und dabei die Regenerativbremseinheit (RBU) zwischen dem Regenerativbrems-Betriebszustand und dem Überblend-Betriebszustand anforderungsgerecht hin und/oder her schaltet.

9. Bremsausrüstung nach Anspruch 8, **dadurch gekennzeichnet, dass** in der Regenerativbremseinheit (RBU) ein zweites Schaltventil (154) vorhanden ist, welches den zweiten Anschluss (32) der Regenerativbremseinheit (RBU) sperrt oder freigibt.

10. Bremsausrüstung nach Anspruch 9, **dadurch gekennzeichnet, dass** das zweite Schaltventil (154) eine federbetätigte Durchlassstellung und eine elektromagnetisch einstellbare Sperrstellung aufweist.

11. Bremsausrüstung nach Anspruch 3 und einem der Ansprüche 9 oder 10, **dadurch gekennzeichnet, dass** bei einer Regenerativbremsung das zweite Schaltventil (154) der Regenerativbremseinheit RBU geschlossen bleibt, während das erste Schaltventil (152) der Regenerativbremseinheit (RBU) geöffnet ist um in den Hydraulikfluid-Druckspeicher (150) der Regenerativbremseinheit (RBU) das aus dem Hauptbremszylinder (14) kommende Hydraulikfluid zu leiten, und/oder
nach oder zum Abbruch einer Regenerativbremsung das zweite Schaltventil (154) der Regenerativbremseinheit (RBU) geöffnet wird, damit aus dem Hydraulikfluid-Druckspeicher (150) heraus gepresstes Hydraulikfluid an der wenigstens einen Radbremse (VL, HR, VR, HL) ansteht.

## Claims

1. Brake equipment comprising a hydraulic, single- or multi-circuit braking system of a land vehicle having an electric drive for executing a regenerative braking of the land vehicle by means of at least one electric machine in or on the drive train of the vehicle and for executing a braking of the land vehicle by means of at least one wheel brake of the at least one brake circuit, wherein
• a brake pedal (10) and at least one sensor (10a) for detecting a braking requirement of the driver are provided,
• a master cylinder (14) is provided for supplying pressurized hydraulic fluid into the at least one wheel brake (VL, HR, VR, HL) in accordance with the braking requirement, wherein
• associated with the at least one brake circuit (I, II) is at least one electrohydraulic control unit (ESC) comprising
• at least a first connection (40) for hydraulic fluid and at least a second connection (42a, 42b) for hydraulic fluid,
• an electronic control unit (ECU) is provided that controls components of the electrohydraulic control unit (ESC) such as a hydraulic pump and switching valves as a function of a braking requirement and/or sensor signals that represent ambient quantities or characteristic quantities coming from the braking system, and
a regenerative brake unit (RBU) that
• has at least a first connection (30) for hydraulic fluid, at least a second connection (32) for hydraulic fluid, valves (152, 154), and a hydraulic fluid accumulator (150),
• is hydraulically coupled into the at least one brake circuit (I, II) between the master cylinder (14) and the at least one wheel brake (VL, HR, VR, HL),
**characterized in that**
• the electronic control unit (ECU) controls both the components of the regenerative brake unit (RBU) and the components of the electrohydraulic control unit (ESC) as a function of a braking requirement and/or sensor signals that represent ambient quantities or characteristic quantities coming from the braking system in order to bring about the effect that, in the event of a regenerative braking operation, for at least the at least one wheel brake (VL, HR, VR, HL), the volume of hydraulic fluid corresponding to the braking requirement is not supplied into the at least one wheel brake (VL, HR, VR, HL), but is stored, and
• the regenerative brake unit (RBU) is directly connected to the at least one wheel brake (VL, HR, VR, HL).

2. Brake equipment according to claim 1, **characterized in that** the regenerative brake unit (RBU) and the electrohydraulic control unit (ESC)
• have a first regenerative brake operating state to be controlled, in which the regenerative brake unit (RBU) and the electrohydraulic control unit (ESC) prevent a supply of hydraulic fluid into the at least one wheel brake (VL, HR, VR, HL) corresponding to the driver's requirement and bring about a storage of the hydraulic fluid instead, and
• have a second changeover operating state to be controlled, in which the regenerative brake unit (RBU) and the electrohydraulic control unit (ESC) change over from a regenerative braking to an electrohydraulic braking, wherein in the changeover operating state hydraulic fluid is supplied into the at least one wheel brake (VL, HR, VR, HL) in accordance with the driver's requirement and, during this process, hydraulic fluid is released into the respective brake circuit (I, II).

3. Brake equipment according to claim2, **characterized in that** the hydraulic fluid accumulator (150) is preloaded with a spring (150b) in order to exert a compliant counterforce against inflowing hydraulic fluid, and / or
the hydraulic fluid accumulator (150) in the regenerative brake unit (RBU) is connected in series with a first switching valve (152) that has an electromagnetically settable let-through position and a spring-actuated blocking position.

4. Brake equipment according to one of claims 2 or 3, **characterized in that** the regenerative brake unit (RBU) is coupled into the at least one brake circuit (I, II) between the master cylinder (14) and the electrohydraulic control unit (ESC), wherein
• the first connection (30) for hydraulic fluid of the regenerative brake unit (RBU) is connected to a connection of the master cylinder (14),
• the second connection (32) for hydraulic fluid of the regenerative brake unit (RBU) is connected to the first connection (40) of the electrohydraulic control unit (ESC), and
• a third connection (34) for hydraulic fluid of the regenerative brake unit (RBU) is directly connected to the at least one wheel brake (VL, HR, VR, HL),
• the second connection (42a, 42b) for hydraulic brake fluid of the electrohydraulic control unit (ESC) is connected to one of the wheel brakes (VL, HR, VR, HL), and
• the electronic control unit (ECU) controls both the components of the regenerative brake unit (RBU) and the components of the electrohydraulic control unit (ESC) as a function of a braking requirement and/or sensor signals that represent ambient quantities or characteristic quantities coming from the braking system and, under these circumstances, switches the regenerative brake unit (RBU) to and/or fro between the regenerative brake operating state and the changeover operating state in accordance with requirements.

5. Brake equipment according to claim 4, provided that claim 4 depends from claim 3, wherein the first switching valve (152) connects the hydraulic fluid accumulator (150) to the connecting line between the first and the second connection (30, 32) of the regenerative brake unit (RBU) and / or
in the regenerative brake unit (RBU) between the hydraulic fluid accumulator (150) and the first switching valve (152) connected in series therewith a hydraulic line branches off to a second switching valve (154) that blocks or releases the third connection (34), wherein the second switching valve (154) has a spring-actuated blocking position and an electromagnetically settable let-through position.

6. Brake equipment according to one of claims 4 or 5, **characterized in that** in the event of a regenerative braking operation an intake control valve (74) and a shut-off valve (78) in the electrohydraulic control unit (ESC) are closed.

7. Brake equipment according to one of claims 5 or 6, **characterized in that**, in the event of a regenerative braking, the second switching valve (154) of the regenerative brake unit (RBU) remains closed, while the first switching valve (152) of the regenerative brake unit (RBU) is open in order to convey the hydraulic fluid coming from the master cylinder (14) into the hydraulic fluid accumulator (150) of the regenerative brake unit (RBU) and / or
after a regenerative braking or to terminate a regenerative braking the second switching valve (154) of the regenerative braking unit (RBU) is opened so that hydraulic fluid forced out of the hydraulic fluid accumulator (150) is present at the at least one wheel brake (VL, HR, VR, HL) and at the second connection (42a, 42b) for hydraulic fluid of the electrohydraulic control unit (ESC).

8. Brake equipment according to one of claims 2 or 3, **characterized in that** the electrohydraulic control unit (ESC) is coupled into the at least one brake circuit (I, II) between the master cylinder (14) and the regenerative brake unit (RBU), wherein
• the first connection (40) for hydraulic fluid of the electrohydraulic control unit (ESC) is connected to a connection of the master cylinder (14), and
• the second connection (42a, 42b) for hydraulic fluid of the electrohydraulic control unit (ESC) is connected to the first connection (30) for hydraulic fluid of the regenerative brake unit (RBU),
• the second connection (32) for hydraulic fluid of the regenerative brake unit (RBU) is directly connected to the at least one wheel brake (VL, HR), and
• the electronic control unit (ECU) controls both the components of the regenerative brake unit (RBU) and the components of the electrohydraulic control unit (ESC) as a function of a braking requirement and/or sensor signals that represent ambient quantities or characteristic quantities coming from the braking system and, under these circumstances, switches the regenerative brake unit (RBU) to and/or fro between the regenerative brake operating state and the changeover operating state in accordance with requirements.

9. Brake equipment according to claim 8, **characterized in that** in the regenerative brake unit (RBU) there is a second switching valve (154) that blocks or releases the second connection (32) of the regenerative brake unit (RBU).

10. Brake equipment according to claim 9, **characterized in that** the second switching valve (154) has a spring-actuated let-through position and an electromagnetically settable blocking position.

11. Brake equipment according to claim 3 and one of claims 9 or 10, **characterized in that**, in the event of a regenerative braking, the second switching valve (154) of the regenerative brake unit (RBU) remains closed, while the first switching valve (152) of the regenerative brake unit (RBU) is open in order to convey the hydraulic fluid coming from the master cylinder (14) into the hydraulic fluid accumulator (150) of the regenerative brake unit (RBU) and / or after a regenerative braking or to terminate a regenerative braking the second switching valve (154) of the regenerative brake unit (RBU) is opened so that hydraulic fluid forced out of the hydraulic fluid accumulator (150) is present at the at least one wheel brake (VL, HR, VR, HL).

## Revendications

1. Installation de frein pour véhicule terrestre équipée d'un système de freinage hydraulique à circuit unique ou à circuits multiples avec un entraînement électrique pour générer une décélération régénératrice du véhicule terrestre par l'intermédiaire d'au moins une machine électrique installée dans ou sur la ligne de transmission du véhicule et pour décélérer le véhicule terrestre par l'intermédiaire d'au moins un frein de roue, dans le cadre de laquelle sont prévus :
• une pédale de frein (10) et au moins un capteur (10a) destiné à détecter un souhait de freinage du conducteur,
• un maître-cylindre (14) pour alimenter au moins un des freins de roue (VL, HR, VR, HL) en fluide hydraulique sous pression, conformément au souhait de freinage,
• une unité de commande électro-hydraulique (ESC), qui comporte
• au moins un premier raccordement (40) pour le fluide électro-hydraulique et au moins un deuxième raccordement (42a, 42b) pour le fluide électro-hydraulique, étant associée à au moins un des circuits de freinage (I, II) et,
• un appareil de commande électronique (ECU) qui commande des composants de l'unité de commande électro-hydraulique (ESC), comme la pompe hydraulique et les valves de commande, en fonction d'un souhait de freinage et/ou de signaux de détection restituant des grandeurs caractéristiques ambiantes ou issues du système de freinage, et
• une unité de freinage régénérateur (RBU)
• qui présente au moins un premier raccordement (30) pour le fluide hydraulique, au moins un deuxième raccordement (32) pour le fluide hydraulique, des valves (152, 154) et un réservoir de fluide hydraulique sous pression (150)
• et qui est incorporée hydrauliquement entre le maître-cylindre (14) et ledit frein de roue (VL, HR, VR, HL), dans au moins un des circuits de freinage (I, II),
**caractérisée en ce que**
• ledit appareil de commande électronique (ECU) commande aussi bien les composants de ladite unité de freinage régénérateur (RBU) que les composants de l'unité de commande électro-hydraulique (ESC) en fonction d'un souhait de freinage et/ou de signaux de détection restituant des grandeurs caractéristiques ambiantes ou issues du système de freinage de manière à ce que, pendant l'opération de freinage régénérateur, le volume de fluide hydraulique correspondant au souhait de freinage ne soit pas délivré à au moins un des freins de roue (VL, HR, VR, HL), mais soit stocké pour au moins un des freins de roue (VL, HR, VR, HL), et
• l'unité de freinage régénérateur (RBU) est directement reliée à au moins un des freins de roue (VL, HR, VR, HL).

2. Installation de frein selon la revendication 1, **caractérisée en ce que** l'unité de freinage régénérateur (RBU) et l'unité de commande électro-hydraulique (ESC)
• possèdent un premier état de fonctionnement de freinage régénérateur à commander, dans lequel l'unité de freinage régénérateur (RBU) et l'unité de commande électro-hydraulique (ESC) coupent, conformément au souhait du conducteur, l'alimentation en fluide hydraulique d'au moins un des freins de roue (VL, HR, VR, HL) et entraînent, au lieu de cela, le stockage du fluide hydraulique, et
• un deuxième état de service de fonctionnement de transition à commander, dans lequel l'unité de freinage régénérateur (RBU) et l'unité de commande électro-hydraulique (ESC) passent d'un freinage régénérateur à un freinage électro-hydraulique, l'état de fonctionnement de transition assurant l'alimentation en fluide hydraulique d'au moins un des freins de roue (VL, HR, VR, HL) conformément au souhait du conducteur et, ce faisant, la délivrance de fluide hydraulique dans le circuit de freinage (I, II) respectif.

3. Installation de frein selon la revendication 2, **caractérisée en ce que** ledit réservoir de fluide hydraulique sous pression (150) est précontraint au moyen d'un ressort (150b) pour exercer une force antagoniste souple contre le fluide hydraulique entrant,
et/ou
que le réservoir de fluide hydraulique sous pression (150) est disposé monté en série dans l'unité de freinage régénérateur (RBU) avec une première valve de commande (152), laquelle possède une position de passage réglable électromagnétiquement et une position d'arrêt actionnée par un ressort.

4. Installation de frein selon l'une des revendications 2 ou 3, **caractérisée en ce que** l'unité de freinage régénérateur (RBU) est incorporée dans au moins un des circuits de freinage (I, II) entre le maître-cylindre (14) et l'unité de commande électrohydraulique (ESC),
• le premier raccordement (30) pour le fluide hydraulique de l'unité de freinage régénérateur (RBU) étant relié à un raccordement du maître-cylindre (14),
• le deuxième raccordement (32) pour le fluide hydraulique de l'unité de freinage régénérateur (RBU) étant relié au premier raccordement (40) de l'unité de commande électro-hydraulique (ESC) et
• un troisième raccordement (34) pour le fluide hydraulique de l'unité de freinage régénérateur (RBU) étant directement relié à au moins un des freins de roue (VL, HR, VR, HL),
• le deuxième raccordement (42a, 42b) pour le fluide hydraulique de l'unité de commande électro-hydraulique (ESC) étant relié à un des freins de roue (VL, HR, VR, HL) et
• l'appareil de commande électronique (ECU) commandant aussi bien les composants de l'unité de freinage régénérateur (RBU) que les composants de l'unité de commande électro-hydraulique (ESC) en fonction d'un souhait de freinage et/ou de signaux de détection restituant des grandeurs caractéristiques ambiantes ou issues du système de freinage, et l'unité de freinage régénérateur (RBU) commutant ce faisant alternativement entre l'état de fonctionnement de freinage régénérateur et l'état de fonctionnement de transition, conformément au souhait du conducteur.

5. Installation de frein selon la revendication 4, dans la mesure où celle-ci dépend de la revendication 3, dans le cadre de laquelle la première valve de commande (152) relie le réservoir de fluide hydraulique sous pression (150) à la conduite de raccordement entre le premier et le deuxième raccordement (30, 32) de l'unité de freinage régénérateur (RBU) et/ou, dans l'unité de freinage régénérateur (RBU), entre le réservoir de fluide hydraulique sous pression (150) et la première valve de commande montée en série par rapport à ce dernier, une conduite hydraulique bifurque vers une deuxième valve de commande (154), laquelle obture ou libère le troisième raccordement (34), la deuxième valve de commande (154) présentant une position de fermeture actionnée par ressort et une position de passage réglable électromagnétiquement.

6. Installation de frein selon l'une des revendications 4 ou 5, **caractérisée en ce que** pendant une opération de freinage régénérateur, un clapet de commande d'aspiration (74) et un clapet de commande de fermeture (78) sont fermés dans l'unité de commande électro-hydraulique (ESC).

7. Installation de frein selon l'une des revendications 5 ou 6, **caractérisée en ce que**, pendant une opération de freinage régénérateur, la deuxième valve de commande (154) de l'unité de freinage régénérateur (RBU) reste fermée pendant que la première valve de commande (152) de l'unité de freinage régénérateur (RBU) est ouverte pour amener dans le réservoir de fluide hydraulique sous pression (150) de l'unité de freinage régénérateur (RBU) le fluide hydraulique venant du maître-cylindre (14), et/ou
qu'après achèvement ou interruption d'une opération de freinage régénérateur, la deuxième valve de commande (154) de l'unité de freinage régénérateur (RBU) est ouverte si bien qu'il se trouve du fluide hydraulique extrait du réservoir de fluide hydraulique sous pression (150) à au moins un des freins de roue (VL, HR, VR, HL) et au deuxième raccordement (42a, 42b) pour le fluide hydraulique de l'unité de commande électro-hydraulique (ESC).

8. Installation de frein selon l'une des revendications 2 ou 3, **caractérisée en ce que** l'unité de commande électro-hydraulique (ESC) est incorporée dans au moins un des circuits de freinage (I, II), entre le maître-cylindre (14) et l'unité de freinage régénérateur (RBU),
• le premier raccordement (40) pour le fluide hydraulique de l'unité de commande électro-hydraulique (ESC) étant relié à un raccordement du maître-cylindre (14),
• le deuxième raccordement (42a, 42b) pour le fluide hydraulique de l'unité de commande électro-hydraulique (ESC) étant relié au premier raccordement (30) pour le fluide hydraulique de l'unité de freinage régénérateur (RBU),
• le deuxième raccordement (32) pour le fluide hydraulique de l'unité de freinage régénérateur (RBU) étant directement relié à au moins un des freins de roue (VL, HR), et
• l'appareil de commande électronique (ECU) commandant aussi bien les composants de l'unité de freinage régénérateur (RBU) que les composants de l'unité de commande électro-hydraulique (ESC) en fonction d'un souhait de freinage et/ou de signaux de détection restituant des grandeurs caractéristiques ambiantes ou issues du système de freinage, et l'unité de freinage régénérateur (RBU) commutant ce faisant alternativement entre l'état de fonctionnement de freinage régénérateur et l'état de fonctionnement de transition, conformément au souhait du conducteur.

9. Installation de frein selon la revendication 8, **caractérisée en ce que** l'unité de freinage régénérateur (RBU) comporte une deuxième valve de commande (154) laquelle obture ou libère le deuxième raccordement (32) de l'unité de freinage régénérateur (RBU).

10. Installation de frein selon la revendication 9, **caractérisée en ce que** la deuxième valve de commande (154) présente une position de passage actionnée par ressort et une position de fermeture réglable électromagnétiquement.

11. Installation de frein selon la revendication 3 et l'une des revendications 9 ou 10, **caractérisée en ce que**, pendant une opération de freinage régénérateur, la deuxième valve de commande (154) de l'unité de freinage régénérateur (RBU) reste fermée pendant que la première valve de commande (152) de l'unité de freinage régénérateur (RBU) est ouverte pour amener dans le réservoir de fluide hydraulique sous pression (150) de l'unité de freinage régénérateur (RBU) le fluide hydraulique venant du maître-cylindre (14), et/ou qu'après achèvement ou interruption d'une opération de freinage régénérateur, la deuxième valve de commande (154) de l'unité de freinage régénérateur (RBU) est ouverte pour qu'il se trouve du fluide hydraulique extrait du réservoir de fluide hydraulique sous pression (150) à au moins un des freins de roue (VL, HR, VR, HL).
